# EUROPEAN PATENT APPLICATION

(11) **EP 3 363 555 A1**
(43) Date of publication of application: **22.08.2018**
(21) Application number: 16855484.8
(22) Date of filing: 13.10.2016
(51) Int. Cl.: B21D 39/06, B21D 39/20, B21D 53/88, B62D 21/02

(54) **METHOD FOR JOINING MUTUAL MEMBERS CONSTITUTING FRAME STRUCTURE MOUNTED ON AUTOMOBILE, AND FRAME STRUCTURE MOUNTED ON AUTOMOBILE**

(30) Priority: 14.10.2015 JP 2015202963
(71) Applicant: Kabushiki Kaisha Kobe Seiko Sho (Kobe Steel, Ltd.), Kobe-shi, Hyogo 651-8585 (JP)
(72) Inventor: HASHIMURA, Toru, Hyogo 651-2271 (JP); KATSUMA, Hideto, Hyogo 651-2271 (JP); MAEDA, Yasuhiro, Hyogo 651-2271 (JP); YUKISHIGE, Ryohei, Hyogo 651-2271 (JP)
(74) Representative: TBK
(86) International application number: PCT/JP2016/080421
(87) International publication number: WO 2017/065231

(57) **Abstract**

A side member (2) (example of second member) having a hollow shape is inserted into holes (1a) formed in a cross member (1) (example of first member) (member insertion step). The cross member (1) and the side member (2) are joined by caulking by expanding an insertion portion (A) of the side member (2) from the inside of the insertion portion (A) (caulked junction step). The insertion portion (A) of the side member (2) is a portion inserted into the cross member (1).

## Description

### TECHNICAL FIELD

The present invention relates to a junction method for joining members that constitute a frame structure attached to an automobile, and a frame structure attached to an automobile.

### BACKGROUND ART

It has been known to use aluminum to form a whole vehicle for the purpose of improvement of fuel efficiency and dynamic performance by weight saving. However, weight saving of a vehicle achieved by the use of aluminum for the whole vehicle considerably increases product cost. In recent years, a "multi-material" vehicle designing and manufacturing method has been attracting attention as a method capable of achieving weight saving while reducing a rise of cost. Even production of vehicles of this type has started. According to this designing and manufacturing method, steel, and lightweight material other than steel, such as aluminum, magnesium, and fiber reinforced plastic (FRP), and carbon fiber reinforced plastic (CFRP) are used in a composite manner to form one vehicle.

For example, in case of an automobile body of a monocoque type or the like, only a chassis of a sub frame of a vehicle around a suspension is constituted by a component different from an upper body (vehicle body frame). The sub frame is attached to a lower part of the body, and supports an engine and speed reduction gears of the automobile (vehicle). Support parts around the suspension are attached to the frame. Conventionally, sub frames of most vehicles have been made of steel or aluminum alone. A sub frame made of steel is manufactured at a lower cost than that of a sub frame made of aluminum, but has a large weight. A sub frame made of aluminum is more lightweight than a sub frame made of steel, but is manufactured at a high cost. Accordingly, it is considered that a well-balanced point between cost and weight may be present when a frame structure is made of a combination of different types of material, i.e., a combination of steel and aluminum. For producing a sub frame having a structure partially including aluminum material, junction of different types of metal needs to be performed.

A method often used for joining different types of material is a point junction method using a rivet, a bolt, a punching screw or the like. In addition, a line junction method for junction of relatively high strength, such as brazing, has been also devised.

Furthermore, Patent Document 1 describes a sub frame structure produced by joining an iron plate material and an aluminum member. A friction welding method (friction stir welding (FSW) method) is used for junction between the iron plate material and the aluminum member. Note that the friction welding method is one of line junction methods.

### PRIOR ART DOCUMENT

### PATENT DOCUMENT

Patent Document 1: Japanese Patent Laid-open Publication No. 2014-168805

### SUMMARY OF THE INVENTION

### PROBLEMS TO BE SOLVED BY THE INVENTION

In case of a frame structure which requires a high level of strength rigidity or fatigue strength, such as a sub frame of a vehicle, strength rigidity of a junction portion becomes relatively low when different types of material are joined by a point junction method using a rivet or the like. It is therefore assumed that required strength rigidity or fatigue rigidity is difficult to reach. It is further assumed that a required strength level is difficult to reach for an automobile requiring a higher entire strength level when junction is made by a line junction method such as brazing and friction welding.

Furthermore, the friction welding method requires dedicated equipment. Large friction force is applied to an indenter from the rear and the front of members to be joined at the time of junction. In this case, a large-scale force applying jig is needed. In addition, it is difficult to increase a junction speed to a higher speed. Accordingly, junction cost inevitably becomes extremely high when the friction welding method is used.

The present invention has been developed in consideration of the aforementioned circumstances. An object of the present invention is to provide a junction method for joining members that constitute a frame structure for an automobile, as a junction method capable of increasing strength reliability more than a conventional junction method, and joining the members at relatively low cost.

### SOLUTIONS TO THE PROBLEMS

A junction method according to an aspect of the present invention is a junction method for joining members that constitute a frame structure attached to an automobile, the method is characterized by including : a member insertion step that inserts a second member having a hollow shape into a hole formed in a first member; and a caulked junction step that joins the first member and the second member by caulking by expanding an insertion portion of the second member from the inside of the insertion portion, the insertion portion of the second member being a portion inserted into the first member.

According to the caulked junction described above, execution and quality maintenance of strength are easier than those of a friction welding method (FSW method) or other methods. In addition, the caulked junction described above is more advantageous in view of equipment cost than the friction welding method (FSW method) which requires a large-scale force applying jig. The method according to the present invention is therefore capable of increasing strength reliability more than that of a conventional junction method, and capable of joining members at relatively low cost.

Furthermore, in the junction method according to the one aspect of the present invention, the caulked junction step preferably includes: an elastic body positioning step that inserts an elastic body from an end of the second member to position the elastic body inside the insertion portion of the second member; and an elastic body compression step that expands the insertion portion of the second member from the inside of the insertion portion by applying axial compression force to the elastic body positioned inside the insertion portion of the second member, and thereby expanding the elastic body outward.

According to this configuration, execution is easy, and equipment cost is relatively low. This reduction of equipment cost to relatively low cost is realizable because execution is achievable only by the use of equipment which applies compression force to the elastic body.

Furthermore, the junction method according to the one aspect of the present invention preferably further includes a first member reinforcement step that reinforces a portion included in the first member and containing the hole by using a reinforcing member. The member insertion step is preferably performed after execution of the first member reinforcement step.

According to this configuration, strength of the junction portion further increases.

Furthermore, the junction method according to the one aspect of the present invention preferably further includes a second member reinforcement step that reinforces the insertion portion of the second member by using a reinforcing member. The member insertion step is preferably performed after execution of the second member reinforcement step.

According to this configuration, strength of the junction portion further increases.

Furthermore, in the junction method according to the one aspect of the present invention, at least either the first member or the second member is preferably an assembly member produced by assembling a plurality of parts.

According to this configuration, the parts constituting the respective members may be parts easily available and manufacturable. Accordingly, this configuration is advantageous in view of parts cost.

Furthermore, in the junction method according to the one aspect of the present invention, the first member is preferably a metal material, while the second member is preferably a metal material made of a material different from the material of the first member.

According to this configuration, the balance between the cost and weight of a frame structure is adjustable in comparison with a configuration composed of members made of a single material.

Furthermore, the junction method according to the one aspect of the present invention preferably further includes a coating step that applies coating to at least either the first member or the second member at a caulked junction portion between the first member and the second member, the coating step being executed before the caulked junction step.

According to this configuration, electrolytic corrosion of the junction portion caused by contact between different types of metal is avoidable.

The one aspect of the present invention from a different viewpoint is also directed to a frame structure attached to an automobile. This frame structure is characterized by including: a first member; and a second member having a hollow shape and inserted into a hole formed in the first member. The first member and the second member are brought into a state of caulked junction by a state of expansion of an insertion portion of the second member from the inside of the insertion portion. The insertion portion of the second member is a portion inserted into the first member.

According to the caulked junction described above, execution and quality maintenance of strength are easier than those of a friction welding method (FSW method) or other methods. In addition, the caulked junction described above is more advantageous in view of equipment cost than the friction welding method (FSW method) which requires a large-scale force applying jig. Accordingly, the frame structure of the present invention has higher strength reliability than that of a conventional frame structure, and is manufacturable at relatively low cost.

Furthermore, in the frame structure according to the one aspect of the present invention, at least either a portion included in the first member and containing the hole, or the insertion portion of the second member is preferably reinforced by a reinforcing member.

According to this configuration, strength of the junction portion further increases.

Furthermore, in the frame structure according to the one aspect of the present invention, the first member is preferably a metal material, and the second member is preferably a metal material made of a material different from the material of the first member.

According to this configuration, the balance between the cost and weight of a frame structure is adjustable in comparison with a configuration composed of members made of a single material.

### EFFECTS OF THE INVENTION

The junction method according to an aspect of the present invention is capable of increasing strength reliability more than a conventional junction method, and joining members at relatively low cost.

### BRIEF DESCRIPTION OF THE DRAWINGS

Fig. 1 is a perspective view illustrating a frame structure according to a first embodiment of the present invention.
Fig. 2A is a cross-sectional view of a junction portion, illustrating an elastic body positioning step included in a caulked junction step using an elastic body.
Fig. 2B is a cross-sectional view of the junction portion, illustrating an elastic body compression step included in the caulked junction step using the elastic body.
Fig. 3 is a perspective view illustrating a frame structure according to a second embodiment of the present invention.
Fig. 4 is a perspective view illustrating attachment procedures for attaching a reinforcing member to a cross member during manufacture of the frame structure illustrated in Fig. 3.
Fig. 5 is a perspective view corresponding to Fig. 4, illustrating attachment procedures for attaching a reinforcing member to a cross member when the cross member is an assembly member.
Fig. 6 is a perspective view illustrating a frame structure according to a third embodiment of the present invention.
Fig. 7 is a perspective view illustrating attachment procedures for attaching a reinforcing member to a cross member during manufacture of the frame structure illustrated in Fig. 6.
Fig. 8 is a perspective view corresponding to Fig. 7, illustrating attachment procedures for attaching a reinforcing member to a cross member when the cross member is an assembly member.
Fig. 9 is a perspective view illustrating a frame structure according to a fourth embodiment of the present invention.
Fig. 10 is a perspective view illustrating attachment procedures for attaching a reinforcing member to a cross member during manufacture of the frame structure illustrated in Fig. 9.
Fig. 11 is a perspective view corresponding to Fig. 10, illustrating attachment procedures for attaching a reinforcing member to a cross member when the cross member is an assembly member.
Fig. 12 is a perspective view illustrating a frame structure according to a fifth embodiment of the present invention.
Fig. 13 is an enlarged view of a part B in Fig. 12.
Fig. 14 is a perspective view illustrating a frame structure according to a sixth embodiment of the present invention.
Fig. 15 is an enlarged view of a part C in Fig. 14.

### EMBODIMENTS OF THE INVENTION

Embodiments according to the invention are hereinafter described with reference to the drawings. Note that a frame structure (frame constitution) according to the present invention is applicable to a frame attached to an automobile and provided for various purposes of use, such as a sub frame and a rudder frame of an automobile.

### FIRST EMBODIMENT

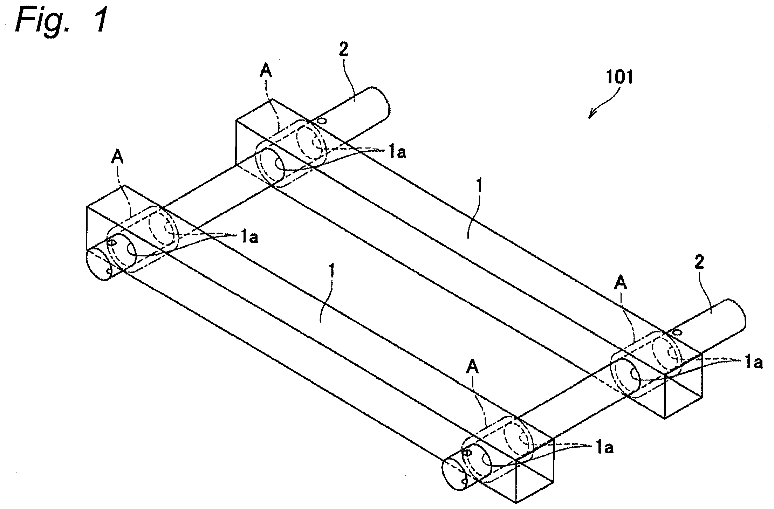

Fig. 1 is a perspective view illustrating a frame structure 101 according to a first embodiment of the present invention. The frame structure 101 is a structure having a shape of parallel crosses, and produced by joining two cross members 1 corresponding to first members, and two side members 2 corresponding to second members.

Each of the cross members 1 is made of steel, for example, while each of the side members 2 is made of aluminum (or aluminum alloy), for example. (The same is applicable to other embodiments described below).

Each of the cross members 1 is a hollow member having a square pipe shape (pipe member), and has holes 1a at end portions. According to the present embodiment, each of the cross members 1 has a square pipe shape, and therefore has two (a pair) of the holes 1a for each of the end portions of the cross member 1. Each of the side members 2 is a hollow member (pipe member) having a round pipe shape. An outside diameter dimension of each of the side members 2 is substantially equivalent to an inside diameter dimension of each of the holes 1a.

Each of the members 1 and 2 is not required to have a straight shape (straight pipe), but may be a bent member. In addition, the members 1 and 2 are not required to cross each other at right angles, but may cross each other at any angles other than right angles. Moreover, the number of the members 1 and 2 is not limited to two for each, but may be other numbers. Furthermore, each of the members 1 and 2 is not required to have a bar shape. (The same is applicable to other embodiments described below).

A method for joining the cross members 1 and the side members 2 is now described. The side members 2 are inserted into the holes 1a formed in the cross members 1 (member insertion step). Subsequently, insertion portions A of the side members 2 inserted into the corresponding cross members 1 are expanded from the inside of the insertion portions A to achieve caulked junction between the cross members 1 and the side members 2 (caulked junction step).

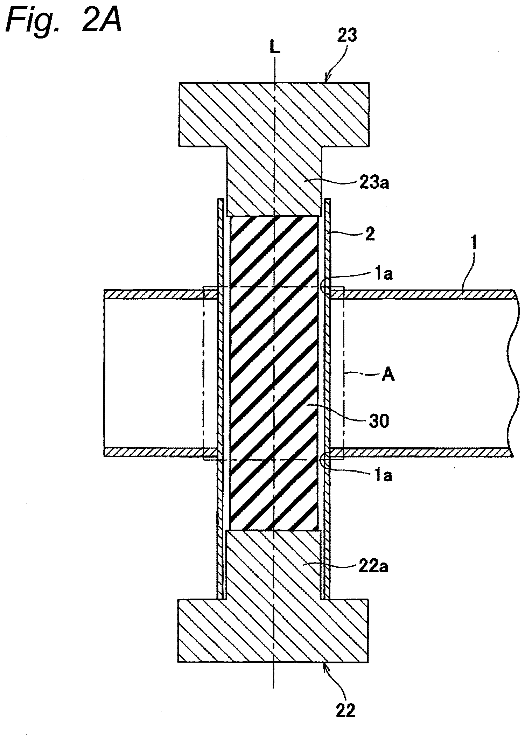

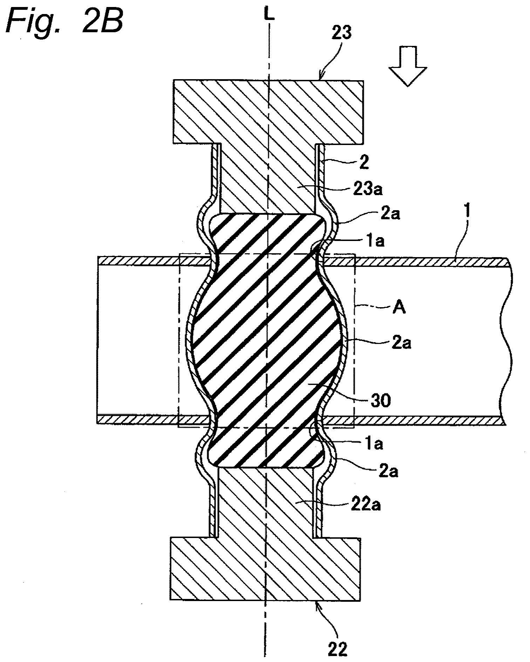

An example of the caulked junction step is now described with reference to Figs. 2A and 2B. Note that Figs. 2A and 2B are views each illustrating an example of a method for performing caulked junction between the cross member 1 and the side member 2 by using rubber 30 corresponding to an elastic body. Each length of the side members 2 illustrated in Fig. 1 is not matched with a length of the side member 2 illustrated in Figs. 2A and 2B. When the side members 2 are long as illustrated in Fig. 1, each of protrusions 22a (small-diameter portions) of pipe saddles 22, and protrusions 23a (small-diameter portions) of indenters 23 are made longer than the protrusions 22a and the protrusions 23a illustrated in Figs. 2A and 2B, for example.

### <Elastic Body Positioning Step>

Initially, the rubber 30 having a cylindrical shape is inserted from an end of the side member 2 into the side member 2. Simultaneously, the protrusion 22a of the pipe saddle 22 is inserted into the side member 2 to position the rubber 30 inside the insertion portion A of the side member 2. In addition, the protrusion 23a of the indenter 23 is inserted from an end of the side member 2 into the side member 2.

### <Elastic Body Compression Step>

Thereafter, the protrusion 23a of the indenter 23 is pressed into the side member 2 to apply axial compression force to the rubber 30 positioned inside the insertion portion A of the side member 2 and thereby expand the rubber 30 outward. In this manner, the insertion portion A of the side member 2 is expanded from the inside of the insertion portion A. As illustrated in Fig. 2B, portions included in the insertion portion A of the side member 2 and coming into contact with inner surfaces of the holes 1a of the cross member 1 are strongly pressed against the inner surfaces of the hole 1a. However, deformation of these portions is prevented by the cross member 1. On the other hand, deformation of portions included in the insertion portion A of the side member 2 and located before and behind the holes 1a in the axial direction is not particularly restricted by the cross member 1. Accordingly, these portions expand outward. These portions are given a reference number 2a and expressed as diameter expanded portions 2a.

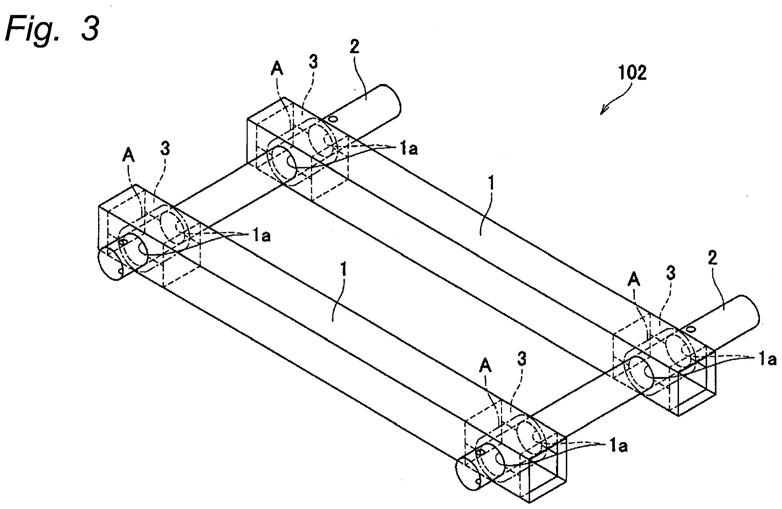

The insertion portion A of the side member 2 is strongly pressed against the inner surfaces of the holes 1a of the cross member 1, and expanded into an expanded pipe having a corrugated shape. As a result, strong junction between the side member 2 and the cross member 1 is achieved. Note that expansion of the insertion portion A (expanded pipe) of the frame structure 101 illustrated in Fig. 1 is not shown in the figure. (The same is applicable to other embodiments described below (Figs. 3, 6, 9, 12, 14).

### SECOND EMBODIMENT

A frame structure 102 according to a second embodiment of the present invention is now described with reference to Figs. 3 to 5. The frame structure 102 according to the present embodiment is a frame structure including reinforcing members 3 each of which reinforces a portion included in the cross member 1 and containing the hole 1a, i.e., a cross member 1 side of a junction portion between the cross member 1 and the side member 2.

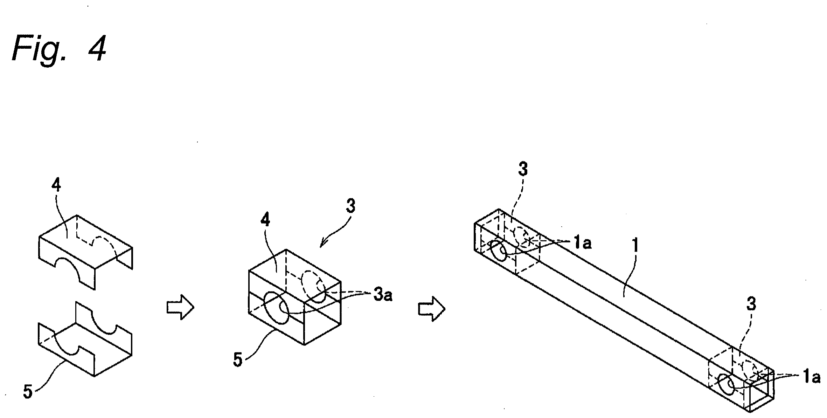

As illustrated in Fig. 4, the reinforcing member 3 is produced by joining a set of reinforcing plates 4 and 5 each having a U-shaped cross section. The reinforcing member 3 includes holes 3a each having a size equivalent to the size of the hole 1a formed in the cross member 1. The reinforcing plates 4 and 5 are joined to each other by welding, an adhesive or the like.

The reinforcing member 3 is inserted from an end of the cross member 1. The holes 1a and the holes 3a are aligned. Subsequently, the cross member 1 and the reinforcing member 3 are joined by an adhesive or the like (first member reinforcement step). Thereafter, the member insertion step and the caulked junction step (not limited to method using rubber 30) described above are performed to join the cross member 1 and the side member 2 into the frame structure 102.

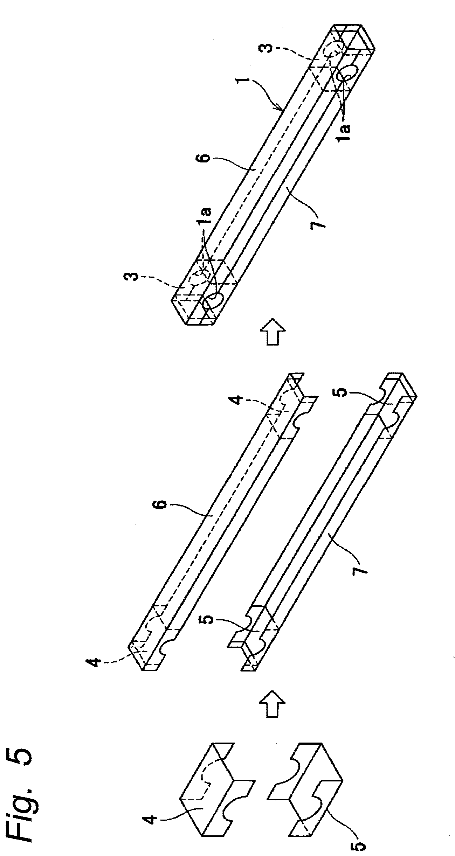

Fig. 5 is a perspective view corresponding to Fig. 4 and illustrating attachment procedures for attaching the reinforcing member to the cross member 1 when the cross member 1 is an assembly member. The cross member 1 illustrated in Fig. 5 is produced by joining a set of cross member segments 6 and 7 each having a U-shaped cross-sectional shape.

The reinforcing plates 4 and 5 are joined to the inner surfaces of the cross member segments 6 and 7, respectively, by an adhesive or the like. Subsequently, the cross member segments 6 and 7 are joined to each other. Junction between the cross member segments 6 and 7 is achieved by welding, for example. Note that the reinforcing plates 4 and 5 may be initially joined into the reinforcing member 3 having a square pipe shape. In this case, the reinforcing member 3 thus produced may be joined to either the cross member segment 6 or 7, whereafter the cross member segments 6 and 7 may be joined to each other.

### THIRD EMBODIMENT

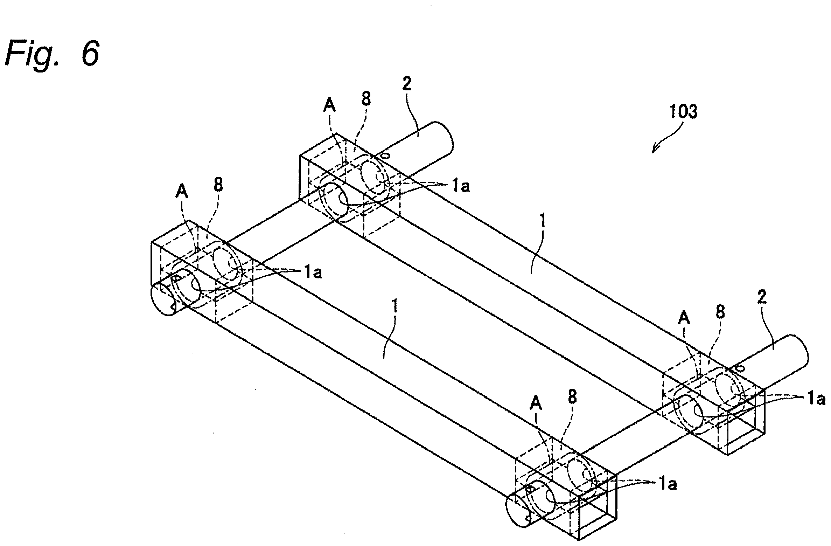

A frame structure 103 according to a third embodiment of the present invention is now described with reference to Figs. 6 to 8. The third embodiment is different from the second embodiment in a configuration of a reinforcing member provided on the cross member 1. Figs. 6 to 8 are views corresponding to Figs. 3 to 5, respectively. Only the different point between the third embodiment and the second embodiment is described herein.

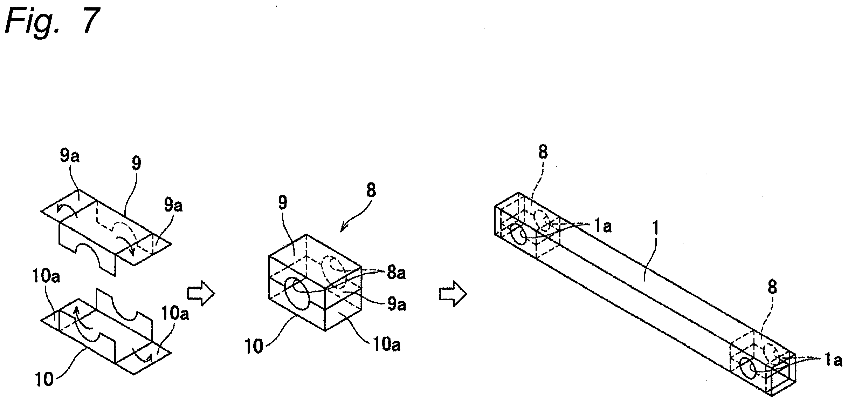

As illustrated in Fig. 7, a reinforcing member 8 according to the present embodiment is a box-shaped reinforcing member which includes two (a set of) holes 8a. The reinforcing member 8 is produced by joining a set of reinforcing plates 9 and 10 each constituted by a folded plate material. Each of the holes 8a has a size equivalent to the size of the hole 1a formed in the cross member 1.

The reinforcing plates 9 and 10 are reinforcing plates produced by inwardly folding not only portions each including a semicircular notch, but also other both end portions 9a and 10a. The reinforcing member 8 according to the present embodiment is capable of increasing the strength of the junction portion between the cross member 1 and the side member 2 more than the reinforcing member 3 according to the second embodiment.

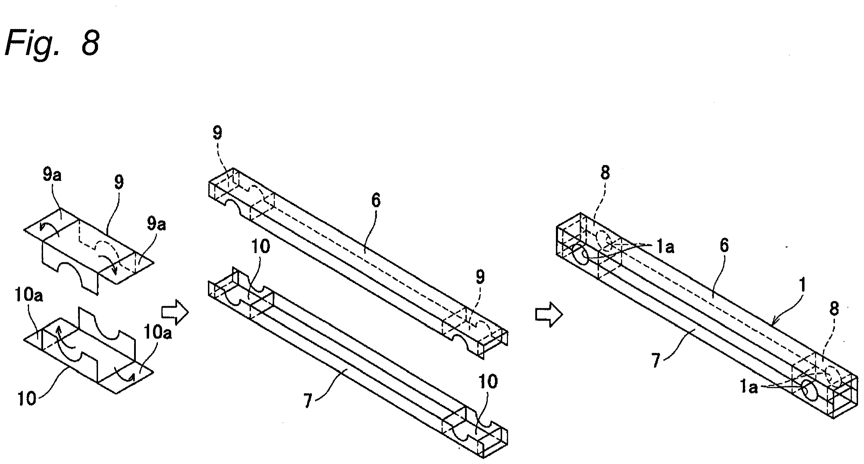

Fig. 8 is a perspective view illustrating attachment procedures for attaching the reinforcing member to the cross member 1 when the cross member 1 is an assembly member. The reinforcing plates 9 and 10 are joined by an adhesive or the like to the inner surfaces of a set of the cross member segments 6 and 7 each having a U-shaped cross-sectional shape. Thereafter, the cross member segments 6 and 7 are joined to each other. Junction between the cross member segments 6 and 7 is achieved by welding, for example. Note that the reinforcing plates 9 and 10 may be initially joined into the box-shaped reinforcing member 8. Subsequently, the reinforcing member 8 may be joined to either the cross member segment 6 or 7. Thereafter, the cross member segments 6 and 7 may be joined to each other.

### FOURTH EMBODIMENT

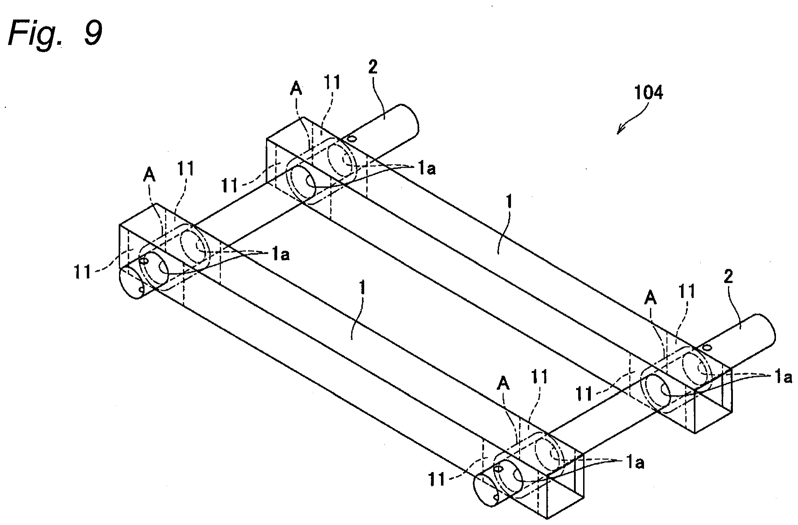

A frame structure 104 according to a fourth embodiment of the present invention is now described with reference to Figs. 9 to 11. The fourth embodiment is different from the second embodiment in a configuration of a reinforcing member provided on the cross member 1. Figs. 9 to 11 are views corresponding to Figs. 3 to 5, respectively. Only the different point between the fourth embodiment and the second embodiment is described herein.

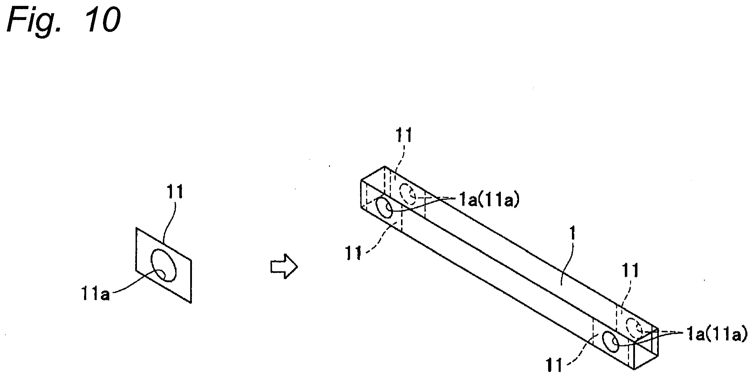

As illustrated in Figs. 9 and 10, each of reinforcing members 11 according to the present embodiment is a quadrangular plate material having a hole 11a. The two reinforcing members 11 provided for each side of the cross member 1 are joined to inner surfaces of the cross member 1 by an adhesive or the like. Each of the holes 11a has a size equivalent to the size of the hole 1a formed in the cross member 1.

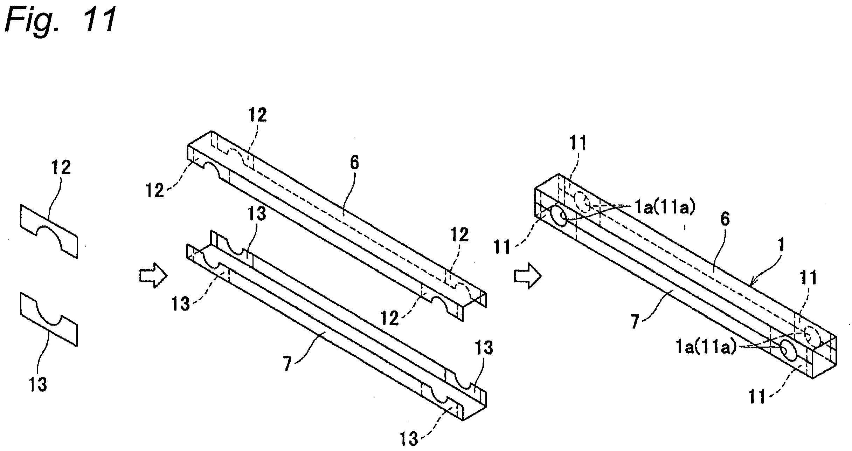

As illustrated in Fig. 11, it is assumed that the reinforcing member 11 is similarly produced by joining a set of reinforcing plate segments 12 and 13 when the cross member 1 is an assembly member produced by joining the cross member segments 6 and 7. In this case, the reinforcing member 11 which is not divided as illustrated in Fig. 10 (quadrangular plate material having a hole) may be initially joined to either the cross member segment 6 or 7, in place of divided reinforcing plates, such as the reinforcing plate segments 12 and 13. Thereafter, the cross member segments 6 and 7 may be joined. The reinforcing member 11 according to the present embodiment is more easily manufacturable than the reinforcing member 3 according to the second embodiment.

### FIFTH EMBODIMENT

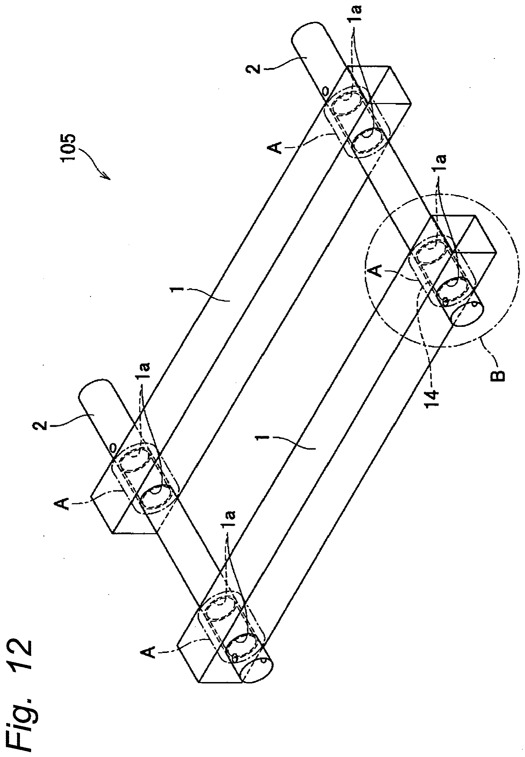

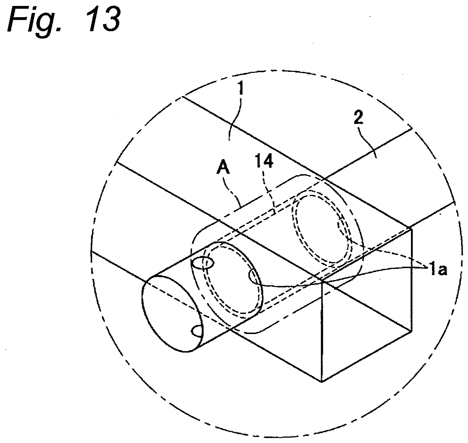

A frame structure 105 according to a fifth embodiment of the present invention is now described with reference to Figs. 12 and 13.

Each of the second to fourth embodiments described above is such an embodiment which reinforces a portion included in the cross member 1 and containing the hole 1a, i.e., the cross member 1 side of the junction portion between the cross member 1 and the side member 2. On the other hand, each of a fifth embodiment and a sixth embodiment described below is an embodiment which reinforces the insertion portion A of the side member 2, i.e., the side member 2 side of the junction portion between the cross member 1 and the side member 2.

As illustrated in Fig. 12, each of reinforcing members 14 herein is a short pipe having a round pipe shape similar to the shape of the side member 2, and inserted into the side member 2.

Each of the reinforcing members 14 is inserted from an end of the side member 2 such that the reinforcing member 14 is positioned at a cross portion (junction portion) between the cross member 1 and the side member 2. The side member 2 and the reinforcing member 14 in this condition are joined by an adhesive or the like (second member reinforcement step). Thereafter, the member insertion step, and the caulked junction step (not limited to method using rubber 30) described above are performed to join the cross member 1 and the side member 2 into a frame structure 105.

### SIXTH EMBODIMENT

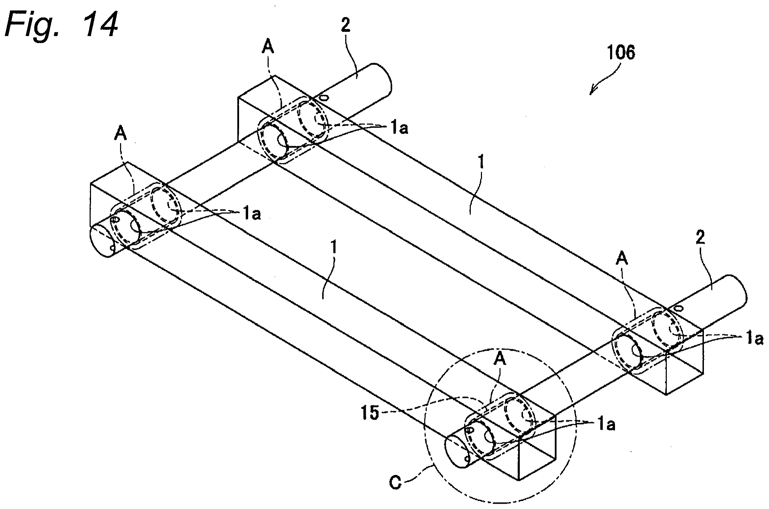

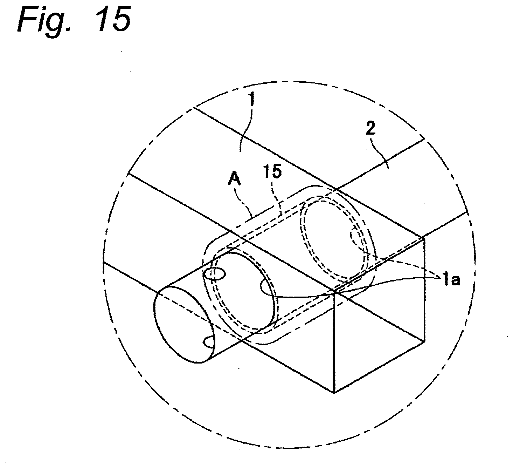

A frame structure 106 according to a sixth embodiment of the present invention is now described with reference to Figs. 14 and 15. The sixth embodiment is different from the fifth embodiment in positioning of a reinforcing member having a round pipe shape and provided on the side member 2. While the reinforcing member 14 having a round pipe shape is positioned inside the side member 2 according to the fifth embodiment, a reinforcing member 15 having a round pipe shape is positioned outside the side member 2 instead of inside according to the sixth embodiment. In other words, the reinforcing member 15 is externally fitted to the side member 2.

### OTHER EMBODIMENTS

According to the embodiments described above and presented by way of example, the cross member 1 and the side member 2 are made of different materials. More specifically, the cross member 1 (first member) is made of steel, while the side member 2 (second member) is made of aluminum (or aluminum alloy). In this case, it is preferable that at least either the cross member 1 or the side member 2 is coated to prevent electrolytic corrosion caused by contact between different types of metal. Note that this coating is applied to prevent contact between different types of metal. Accordingly, at least the caulked junction portion between the cross member 1 and the side member 2 is initially coated, whereafter the cross member 1 and the side member 2 are joined by caulking after coating. In this manner, caulked junction is performed after coating in consideration that a coating agent does not reach the contact surfaces between the members if caulked junction is performed before coating.

Note that the junction portion between the cross member 1 and the side member 2 is reinforced by the reinforcing member (3, 8, 11, 14, 15) according to the second to sixth embodiments described above. In this case, the members made of different types of metal among the cross member 1, the side member 2, and the reinforcing member (3, 8, 11, 14, 15) are coated to prevent contact between the members of different types of metal. When metal materials of an identical type are used, no probability of electrolytic corrosion is particularly expected. Accordingly, coating of these materials may be omitted.

### MODIFIED EXAMPLES

According to the embodiments described above, the cross member 1 is made of steel, while the side member 2 is made of aluminum (or aluminum alloy). Alternatively, the cross member 1 may be made of aluminum (or aluminum alloy), while the side member 2 may be made of steel. Instead, both the members may be made of identical metal. In addition, when the cross member 1 and the side member 2 are assembly members each constituted by a plurality of parts, each of the cross member 1 and the side member 2 may be made of a combination of steel and aluminum (or aluminum alloy). Moreover, the metal materials of the cross member 1 and the side member 2 are not limited to steel and aluminum (or aluminum alloy), but may be other metal materials. Furthermore, the cross member 1 and the side member 2 may be made of resin materials such as fiber reinforced plastic (FRP) and carbon fiber reinforced plastic (CFRP).

In addition, while the shape of the cross member 1 is a square pipe shape according to the embodiments described above, the cross member 1 may be a member having a round pipe shape, a bar shape having a U-shaped cross section, or other shapes, instead of the square pipe shape. The side member 2 may be a square pipe instead of a round pipe.

According to the embodiments described above, the caulked junction step is performed using the rubber 30 (elastic body). Alternatively, caulked junction (caulked junction by electromagnetic forming) may be achieved by inserting a coil into the side member 2 (second member), and expanding the insertion portion A of the side member 2 (second member) from the inside by utilizing electromagnetic force generated by current flowing in the coil. Instead, caulked junction (mechanical caulked junction) may be achieved by inserting a pipe expanding jig made of metal into the side member 2 (second member), and mechanically shifting the pipe expanding jig toward the radially outside to expand the insertion portion A of the side member 2 (second member) from the inside.

According to the embodiments described above, the cross member 1 corresponding to the first member is an assembly member produced by assembling a plurality of parts. However, the side member 2 corresponding to the second member, or both the first member and the second member may be assembly members each produced by assembling a plurality of parts.

According to the embodiments described above, the side member 2 is inserted into the holes 1a formed in the cross member 1, whereafter the insertion portion is expanded from the inside. Instead, such a structure may be adopted which forms holes in the side member, inserts the cross member into the holes, and expands the insertion portion from the inside.

It is obvious that various other modifications may be made within a range occurring to those skilled in the art.

### DESCRIPTION OF REFERENCE SIGNS

1: Cross member (first member)
1a: Hole
2: Side member (second member)
A: Insertion portion
3, 8, 11, 14, 15: Reinforcing member
101∼106: Frame structure

## Claims

1. A junction method for joining members that constitute a frame structure attached to an automobile, the method comprising:
a member insertion step that inserts a second member having a hollow shape into a hole formed in a first member; and
a caulked junction step that joins the first member and the second member by caulking by expanding an insertion portion of the second member from the inside of the insertion portion, the insertion portion of the second member being a portion inserted into the first member.

2. The junction method according to claim 1, wherein the caulked junction step includes
an elastic body positioning step that inserts an elastic body from an end of the second member to position the elastic body inside the insertion portion of the second member, and
an elastic body compression step that expands the insertion portion of the second member from the inside of the insertion portion by applying axial compression force to the elastic body positioned inside the insertion portion of the second member, and thereby expanding the elastic body outward.

3. The junction method according to claim 1, further comprising a first member reinforcement step that reinforces a portion included in the first member and containing the hole by using a reinforcing member, wherein the member insertion step is performed after execution of the first member reinforcement step.

4. The junction method according to claim 1, further comprising a second member reinforcement step that reinforces the insertion portion of the second member by using a reinforcing member, wherein the member insertion step is performed after execution of the second member reinforcement step.

5. The junction method according to claim 1, wherein at least either the first member or the second member is an assembly member produced by assembling a plurality of parts.

6. The junction method according to any one of claims 1 through 5, wherein
the first member is a metal material, and
the second member is a metal material made of a material different from the material of the first member.

7. The junction method according to claim 6, further comprising a coating step that applies coating to at least either the first member or the second member at a caulked junction portion between the first member and the second member, the coating step being executed before the caulked junction step.

8. A frame structure attached to an automobile, the structure comprising:
a first member; and
a second member having a hollow shape and inserted into a hole formed in the first member, wherein
the first member and the second member are brought into a state of caulked junction by a state of expansion of an insertion portion of the second member from the inside of the insertion portion, the insertion portion of the second member being a portion inserted into the first member.

9. The frame structure according to claim 8, wherein at least either a portion included in the first member and containing the hole, or the insertion portion of the second member is reinforced by a reinforcing member.

10. The frame structure according to claim 8 or 9, wherein
the first member is a metal material, and
the second member is a metal material made of a material different from the material of the first member.
